# EUROPEAN PATENT APPLICATION

(11) **EP 4 309 486 A2**
(43) Date of publication of application: **24.01.2024**
(21) Application number: 23181645.5
(22) Date of filing: 27.06.2023
(51) Int. Cl.: A01D 41/127

(54) **WORK VEHICLE**

(30) Priority: 20.07.2022 JP 2022115562
(71) Applicant: Yanmar Holdings Co., Ltd., Osaka-shi, Osaka (JP)
(72) Inventor: KITAOKA, Harumasa, Okayama-shi (JP); SHIMPUKU, Yuichi, Okayama-shi (JP); ARITA, Eiji, Okayama-shi (JP)
(74) Representative: Dennemeyer & Associates S.A.

(57) **Abstract**

A work vehicle (1) including a car body (101), a traveling portion (102), working portions (200, 400), operation display portions (73, 74), and control portions (50, 80). The car body (101) can travel in a work field. The traveling portion (102) makes the car body (101) travel. The working portions (200, 400) conduct work on a target in the work field. The operation display portions (73, 74) output an operation signal. The control portions (50, 80) control the working portions (200, 400) and the traveling portion (102) based on the operation signal. The control portions (50, 80) control the operation display portions (73, 74) so that the operation display portions (73, 74) display a travel control image and a work control image simultaneously with each other or at different timings from each other. The travel control image includes an image for operating the traveling portion (102). The work control image includes an image for operating the working portions (200, 400).

## Description

### TECHNICAL FIELD

The present invention relates to a work vehicle.

### BACKGROUND ART

Patent Document 1 discloses a combine that is capable of automatic traveling. Firstly, the combine conducts circling reaping by manual traveling to form a region on an outer circumstance side of a farm field in which work is finished and a region on an inner circumstance side of the farm field in which work is not finished, and then, calculates a travel route for automatic traveling in the region in which work is not finished. After that, when the combine is at a position where the combine can capture a travel route for starting the automatic traveling among travel routes for the automatic traveling, it is decided that the combine is in a state in which the automatic traveling is authorized.

### PRIOR ART DOCUMENT

### PATENT DOCUMENT

Patent Document 1: JP2020-18236

### SUMMARY OF INVENTION

### TECHNICAL PROBLEM

In Patent Document 1, a work vehicle such as a combine includes two different operation portions, that is, an operation portion for traveling that makes the combine travel and an operation portion for working that conducts circling reaping. In other words, the two operation portions, the operation portion for traveling and the operation portion for working are needed.

The present invention is made in view of the above-described problem, and the object of the present invention is to provide a work vehicle including an operation portion that can operate both of a working portion and a traveling portion.

### SOLUTION TO PROBLEM

A work vehicle according to the present invention includes a car body, a traveling portion, a working portion, an operation display portion, and a control portion. The car body can travel in a work field. The traveling portion makes the car body travel. The working portion conducts work on a target in the work field. The operation display portion outputs an operation signal. The control portion controls the working portion and the traveling portion based on the operation signal. The control portion controls the operation display portion so that the operation display portion displays a travel control image and a work control image simultaneously with each other or at different timings from each other. The travel control image includes an image for operating the traveling portion. The work control image includes an image for operating the working portion.

A work vehicle according to the present invention includes a car body, a traveling portion, a discharge auger, an operation display portion, and a control portion. The car body can travel in a work field. The traveling portion makes the car body travel. A discharge auger conducts work on a target in the work field. The operation display portion outputs an operation signal. The control portion controls the discharge auger and the traveling portion based on the operation signal. The control portion controls the operation display portion so that the operation display portion displays the work control image when the car body is positioned in a predetermined region of the target and the operation display portion displays a travel control image when the car body is positioned outside the predetermined region of the target. The travel control image includes an image for operating the traveling portion. The work control image includes an image for operating the discharge auger.

### ADVANTAGEOUS EFFECTS OF INVENTION

According to the present invention, a work vehicle including an operation portion that can operate both of a working portion and a traveling portion can be provided.

### BRIEF DESCRIPTION OF DRAWINGS

FIG. 1 is a schematic view of a combine according to an embodiment 1.
FIG. 2 is a block diagram of the combine according to the embodiment 1.
FIG. 3 is a schematic view of a cabin according to the embodiment 1.
FIG. 4 is a view illustrating one example of a mobile communication terminal in the embodiment 1.
FIG. 5 is a block diagram of the mobile communication terminal in the embodiment 1.
FIG. 6 is a front view of the combine at a first time point.
FIG. 7 is a plan view of the combine at the first time point.
FIG. 8 is a view illustrating one example of a work control image displayed on a display portion in the embodiment 1.
FIG. 9 is a flowchart illustrating an operation method of the combine according to the embodiment 1.
FIG. 10 is a view illustrating another example of a work control image displayed on the display portion in the embodiment 1.
FIG. 11 is a block diagram of the mobile communication terminal according to an embodiment 2.
FIG. 12 is a schematic view of a combine according to an embodiment 3.

### DESCRIPTION OF EMBODIMENTS

Hereinafter, an embodiment of the present invention is explained with reference to the drawings. Note that, in the drawings, a same reference numeral is applied to same or corresponding parts and an explanation thereof is not repeated.

### <Embodiment 1>

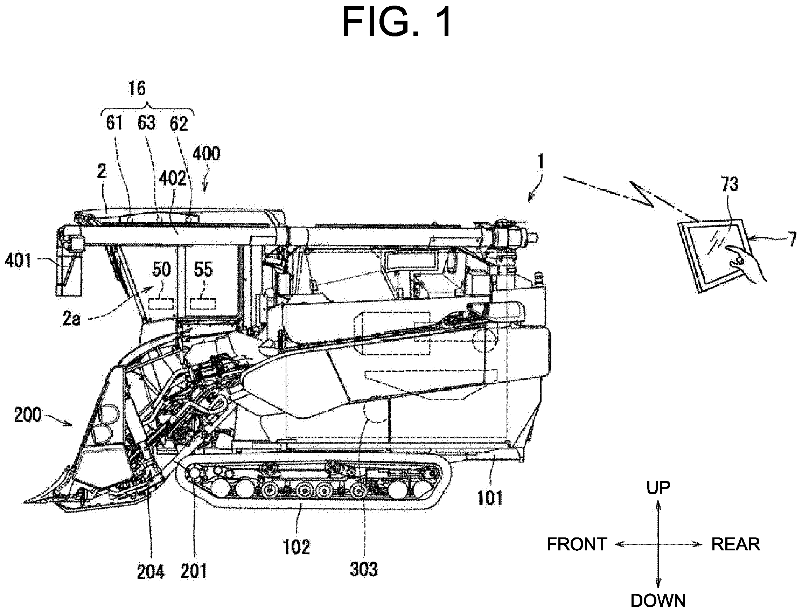

A combine 1 according to an embodiment 1 is explained with reference to FIG. 1. FIG. 1 is a schematic view of the combine 1 according to the embodiment 1. Note that, for the ease of understanding, a front-back direction, a left-right direction, and an up-down direction may be described herein. Here, the front-back direction, the left-right direction, and the up-down direction are directions seen by a worker (that is, a driver) who sits on a driver's seat (not shown) disposed in a driver's space 2a. However, the front-back direction, the left-right direction, and the up-down direction are defined merely for the convenience of explanation, and it is not intended that the direction of the combine 1 of the present invention when the combine 1 is used is limited by the definition of these directions.

As shown in FIG. 1, the combine 1 includes a mobile communication terminal 7. The combine 1 is one example of a "work vehicle". The worker uses the mobile communication terminal 7, etc. to order the combine 1 to conduct harvesting work of agricultural products, etc. while the combine 1 is traveling.

The combine 1 further includes a traveling machine 101, a traveling device 102, a reaping device 200, a discharge auger 400, a first control portion 50, a first storage portion 55, and a first communication device 16. The traveling machine 101 is one example of a "car body". The traveling device 102 is one example of a "traveling portion". Each of the reaping device 200 and the discharge auger 400 is one example of a "working portion". The first control portion 50 is one example of a "control portion".

The traveling machine 101 can travel in a farm field. The farm field is one example of a "work field". In particular, the traveling machine 101 (combine 1) includes an engine (not shown). The engine is, for example, a diesel engine. The engine converts heat energy generated by combustion of fuel into kinetic energy (motive power).

The traveling device 102 is disposed under the traveling machine 101 and supports the traveling machine 101. Further, the traveling device 102 makes the combine 1 travel. In particular, the traveling device 102 travels based on the motive power (kinetic energy) generated in the engine. The traveling device 102 includes, for example, a pair of left and right traveling crawler devices. The pair of left and right traveling crawler devices make the combine 1 travel in the front-back direction. Further, the pair of left and right traveling crawler devices make the combine 1 turn in the left-right direction.

The reaping device 200 is disposed in front of the traveling machine 101. The reaping device 200 conducts work on yet-to-be-reaped cereal culms in the farm field. The yet-to-be-reaped cereal culm is one example of a "target". Specifically, the reaping device 200 reaps the yet-to-be-reaped cereal culms in the farm field. The reaping device 200 activates based on the motive power (kinetic energy) generated in the engine. In particular, the reaping device 200 includes a reaping frame 201 and a cereal culm conveying device 204.

The reaping frame 201 is mounted to a front portion of the traveling machine 101 so as to be freely elevated. A reaping blade is disposed under the reaping frame 201. The reaping device 200 moves the reaping blade forward and backward to cut the roots of the yet-to-be-reaped cereal culms in the farm field. The cereal culm conveying device 204 conveys the reaped cereal culms reaped by the reaping blade to a threshing device (not shown).

The discharge auger 400 is disposed on an upper portion of the traveling machine 101. The discharge auger 400 conducts work on a target in the farm field. Specifically, the discharge auger 400 conveys harvested grains to a conveying vehicle, etc. The grain is one example of the "target".

The discharge auger 400 activates based on the motive power (kinetic energy) generated in the engine. In particular, the discharge auger 400 includes an auger chute 401 and an arm 402. The arm 402 has a column-shaped body and is mounted on the upper portion of the traveling machine 101 so as to be freely moveable. The auger chute 401 is disposed at an end portion of the arm 402. The auger chute 401 is mounted at the end portion of the arm 402 so as to be freely rotatable.

The first communication device 16 is disposed above the traveling machine 101. Specifically, the first communication device 16 is disposed above the cabin 2 described below. The first communication device 16 includes a positioning antenna 61, an inertial measurement device 62, and a communication antenna 63.

The positioning antenna 61 receives an electric wave (positioning signal) from a positioning satellite that composes a Global Navigation Satellite System (GNSS). The inertial measurement device 62 includes a tri-axial angular velocity sensor and a tri-directional acceleration sensor.

The communication antenna 63 is an antenna for conducting wireless communication with the mobile communication terminal 7. A wireless Local Area Network (LAN) such as Wi-Fi (registered trademark), etc. and short-range wireless communication such as Bluetooth (registered trademark), etc. are adopted as the wireless communication. Further, a mobile communication antenna (not shown) for conducting communication using a cellular phone line and the Internet may be provided on the combine 1.

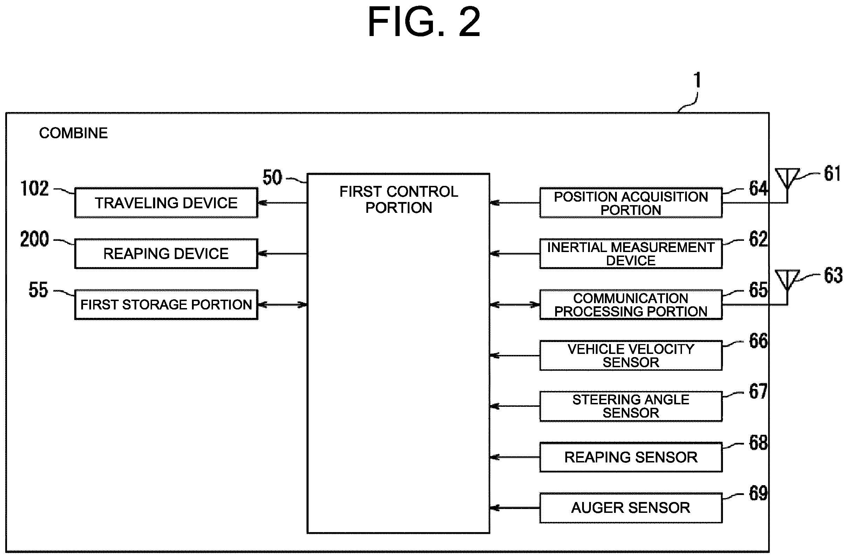

Continuing from the above, with reference to FIG. 1 and FIG. 2, the first control portion 50 is explained in detail. FIG. 2 is a block diagram of the combine 1 according to the embodiment 1. As shown in FIG. 2, the combine 1 further includes the inertial measurement device 62, a position acquisition portion 64, a communication processing portion 65, a vehicle velocity sensor 66, a steering angle sensor 67, a reaping sensor 68, and an auger sensor 69.

The first storage portion 55 is disposed in the traveling machine 101. The first storage portion 55 is a main storage device such as a Read Only Memory (ROM) and a Random Access Memory (RAM). The first storage portion 55 may further include a sub storage device such as a Hard Disk Drive (HDD) or a Solid State Drive (SSD). The first storage portion 55 stores a variety of programs and data, etc.

The first control portion 50 is disposed in the traveling machine 101. The first control portion 50 reads a variety of programs from the first storage portion 55 and runs the programs. The first control portion 50 controls the traveling device 102, the reaping device 200, and the discharge auger 400. In particular, the first control portion 50 is a computing device such as a Central Processing Unit (CPU), etc. The first control portion 50 may be a single hardware component, or may be a plurality of hardware components that can communicate with each other.

The first control portion 50 receives an operation signal output from a steering handle, a main gear shift lever, a variety of switches, and the mobile communication terminal 7, etc. and controls the traveling device 102, the reaping device 200, and the discharge auger 400 in accordance with a command indicated by the operation signal.

Further, the inertial measurement device 62, the position acquisition portion 64, the communication processing portion 65, the vehicle velocity sensor 66, the steering angle sensor 67, the reaping sensor 68, and the auger sensor 69 are connected to the first control portion 50.

The communication processing portion 65 transmits and receives data with the mobile communication terminal 7 via the communication antenna 63.

The position acquisition portion 64 uses a positioning signal that the positioning antenna 61 receives from a positioning satellite to acquire a position of the combine 1 as, for example, information of latitude and longitude. The position acquisition portion 64 may receive a positioning signal from a reference station (not shown) in an appropriate manner and conduct positioning by using a known Real Time Kinematic GNSS (RTK-GNSS) method. The reference station is disposed at a known position around the farm field. In another case, the position acquisition portion 64 may use Differential GNSS (DGNSS) method to conduct positioning. In another case, the position acquisition portion 64 may conduct position acquisition based on radio field intensity of a wireless LAN, etc. or position acquisition by inertial navigation that uses a result of measurement by the inertial measurement device 62, etc.

The vehicle velocity sensor 66 senses a vehicle velocity of the combine 1. The vehicle velocity sensor 66 is provided on an axle shaft disposed on the traveling device 102, etc. When the vehicle velocity sensor 66 is provided on the axle shaft of the traveling device 102, the vehicle velocity sensor 66 generates pulses in accordance with a rotation of the axle shaft. Data of a sensing result acquired by the vehicle velocity sensor 66 is output to the first control portion 50.

The steering angle sensor 67 is provided, for example, on a steering handle and senses a steering angle of the steering handle. Data of a sensing result acquired by the steering angle sensor 67 is output to the first control portion 50.

The reaping sensor 68 senses a height of the reaping device 200 and an activation state of the reaping device 200.
Data of a sensing result acquired by the reaping sensor 68 is output to the first control portion 50.

The auger sensor 69 senses an activation state of the discharge auger 400. Data of a sensing result acquired by the auger sensor 69 is output to the first control portion 50.

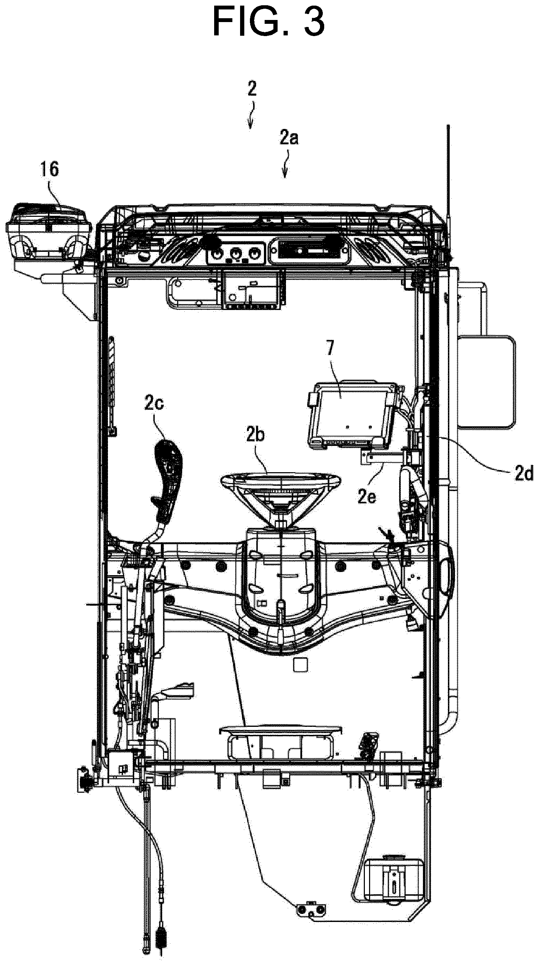

Continuing from the above, with reference to FIG. 1 and FIG. 3, the traveling machine 101 is explained in detail. FIG. 3 is a schematic view of a cabin 2 according to the embodiment 1. As shown in FIG. 1 and FIG. 3, the traveling machine 101 further includes the cabin 2. The cabin 2 has a box shape and the driver's space 2a is formed in the cabin 2. In the driver's space 2a, a worker sits on a driver's seat and drives the combine 1.

The cabin 2 includes a driver's seat, a steering handle 2b, a main gear shift lever 2c, a support column 2d, and a support member 2e. The driver's seat, the steering handle 2b, the main gear shift lever 2c, and the mobile communication terminal 7 are disposed in the driver's space 2a. The steering handle 2b, the main gear shift lever 2c, and the mobile communication terminal 7 output an operation signal indicating a command in accordance with an operation by a worker to the first control portion 50.

The steering handle 2b is, for example, disposed in front of the driver's seat. The steering handle 2b is operated by a worker sitting on the driver's seat and changes a direction in which the traveling device 102 travels. A worker can operate the steering handle 2b to turn the combine 1. The turn includes, for example, a 90-degree turn (α turn), a U-shaped turn, and a fishtail turn.

The main gear shift lever 2c is, for example, disposed on a left side of the driver's seat (steering handle 2b). The main gear shift lever 2c is operated by a worker sitting on the driver's seat and switches a traveling direction of the traveling device 102 between a forward direction and a backward direction.

Further, the main gear shift lever 2c includes a variety of switches. The variety of switches of the main gear shift lever 2c includes, for example, a switch for adjusting a threshing depth, a switch for elevating the reaping device 200, a switch for lowering the reaping device 200, a switch for adjusting a height of the reaping device 200, and a switch for switching whether a motive power generated in the engine is transmitted to the reaping device 200 or not.

Further, the first control portion 50 can conduct control of the automatic traveling of the combine 1. The automatic traveling means that the first control portion 50 included in the combine 1 controls a device for traveling and at least a steering of the tractor 1 is autonomously performed so that the combine 1 follows the predetermined route. The automatic traveling includes a case in which a person is in the combine 1 and a case in which no person is in the combine 1. Further, automatic traveling may be configured so that vehicle velocity, etc. is autonomously controlled in addition to the steering.

When the vehicle velocity is autonomously changed, the first control portion 50 conducts control in which current vehicle velocity sensed by the vehicle velocity sensor 66 becomes closer to target vehicle velocity. The control of the vehicle velocity is, for example, realized by changing at least one of a change gear ratio of a transmission included in a transmission case (not shown) and rotation speed of the engine. Note that the control of the vehicle velocity includes control in which the vehicle velocity becomes zero so that the combine 1 stops.

When steering is autonomously conducted, the first control portion 50 conducts control in which a current steering angle sensed by the steering angle sensor 67 becomes closer to a target steering angle. The control of the steering angle is, for example, realized by actuating a steering actuator provided on a rotation shaft of the steering handle. Note that, instead of the actuation of the steering actuator, the first control portion 50 may directly adjust rotation of each of the left and right traveling crawler devices of the traveling device 102 to adjust an angle of turn of the traveling device 102.

The first control portion 50 can conduct control in which the combine 1 travels in accordance with an operation by a worker using the mobile communication terminal 7, and control of action of the reaping device 200 and the discharge auger 400.

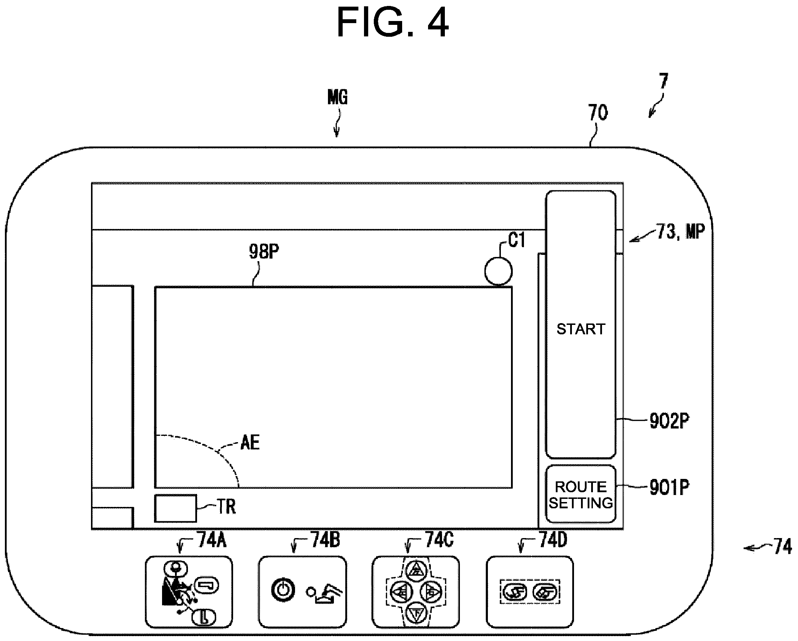

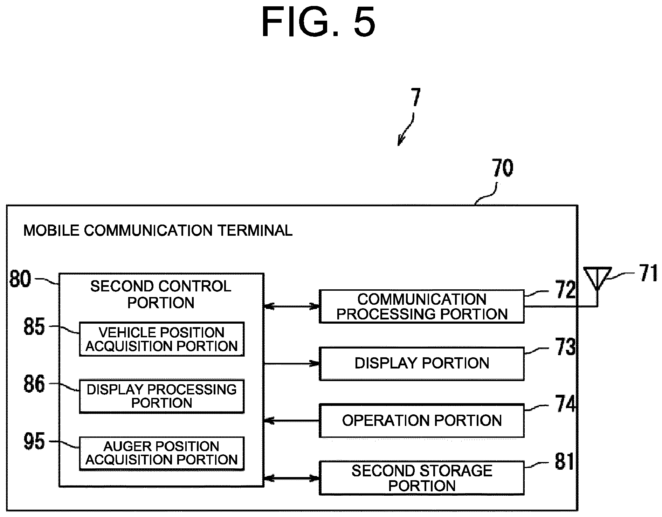

Continuing from the above, with reference to FIG. 4 and FIG. 5, the mobile communication terminal 7 is explained in detail. FIG. 4 is a view illustrating one example of the mobile communication terminal 7 in the embodiment 1. FIG. 5 is a block diagram of the mobile communication terminal 7 in the embodiment 1. As shown in FIG. 4 and FIG. 5, the mobile communication terminal 7 is a tablet terminal, etc.

The mobile communication terminal 7 is supported by the support column 2d. Specifically, the mobile communication terminal 7 is mounted to the support column 2d via the support member 2e. Further, the mobile communication terminal 7 is removable from the traveling machine 101. Specifically, the mobile communication terminal 7 is removable from the support column 2d.

The mobile communication terminal 7 outputs an operation signal to the first control portion 50. In particular, the mobile communication terminal 7 includes a housing 70, a communication antenna 71, a communication processing portion 72, a display portion 73, an operation portion 74, a second control portion 80, and a second storage portion 81. The second control portion 80 is one example of a "control portion". Each of the display portion 73 and the operation portion 74 are one example of an "operation display portion".

The communication antenna 71 is an antenna for conducting wireless communication with the combine 1. The communication processing portion 72 transmits and receives data to and from the combine 1 via the communication antenna 71. In particular, the second control portion 80 can receive a sensing result, etc. of each sensor provided on the combine 1 via the communication processing portion 72 and the communication antenna 71.

Since the combine 1 can be connected to a cellular phone line, the mobile communication terminal 7 can be connected to the cellular phone line via the combine 1. Note that a mobile communication antenna (not shown) may be provided not on the combine 1 but on the mobile communication terminal 7.

The display portion 73 is a liquid crystal display or an organic electroluminescent (EL) display, etc.

The operation portion 74 includes at least one of a touch panel or a hardware key. The hardware key is disposed on a side surface of the housing of the mobile communication terminal 7 or around the display portion 73, etc. and can sense pressing by a finger of a worker, etc. The operation portion 74 includes an auto return set button 74A, a discharge clutch button 74B, an auger operation button 74C, and an auger chute operation button 74D. Further, the touch panel is stacked on the display portion 73 and can sense an operation by an order of a worker, etc.

The second storage portion 81 is disposed in the housing 70. The second storage portion 81 is a main storage device such as a ROM and a RAM. The second storage portion 81 may further include a sub storage device such as an HDD or an SSD. The second storage portion 81 stores a variety of programs and data, etc.

The second control portion 80 is disposed in the housing 70. The second control portion 80 includes a computing device that is not shown. The computing device is a processor or a microprocessor, etc. The computing device reads a variety of programs from the second storage portion 81 and runs the programs. The first control portion 50 and the second control portion 80 can communicate with each other. Note that, instead of the mobile communication terminal 7, the combine 1 may include the second control portion 80.

The second control portion 80 can function as a vehicle position acquisition portion 85, a display processing portion 86, and an auger position acquisition portion 95 by the cooperation between the hardware and the software described above. In particular, the second control portion 80 controls the display portion 73 and the operation portion 74.

An operation method of combine 1 according to the embodiment 1 is explained. As shown in FIG. 4, a travel control image MG is displayed on the display portion 73.

The travel control image MG is an image for operating the traveling device 102. The travel control image MG includes information that indicates a position of the combine 1 in the farm field. In particular, the travel control image MG includes a map image MP, an icon C1, a route setting button image 901P, and a start button image 902P. The map image MP shows a circumstance of the farm field. The map image MP includes a farm field image 98P that indicates the farm field. The icon C1 indicates a position of the combine 1.

The display processing portion 86 of the mobile communication terminal 7 acquirers the map image MP and displays the map image MP on the display portion 73. For example, the map image MP may be stored in the second storage portion 81 or may be acquired via the cellular phone line and the Internet from an outside of the mobile communication terminal 7.

The communication processing portion 72 of the mobile communication terminal 7 receives position information transmitted from the combine 1. The vehicle position acquisition portion 85 acquirers the position information received by the communication processing portion 72. The display processing portion 86 specifies the position of the combine 1 based on the position information acquired by the vehicle position acquisition portion 85 and displays the icon C1 at a corresponding position on the map image MP on the display portion 73.

Note that the position information may include information indicating a direction of the combine 1 that is detected by the steering angle sensor 67 or the inertial measurement device 62, etc., that is, a traveling direction of the combine 1. Further, the display processing portion 86 may change a direction of the icon C 1 in accordance with the direction of the combine 1 included in the position information.

Further, the display processing portion 86 displays the route setting button image 901P and the start button image 902P, etc. so that the route setting button image 901P and the start button image 902P, etc. are superposed on the map image MP on the display portion 73 or the route setting button image 901P and the start button image 902P, etc. are aligned with the map image MP. The route setting button image 901P is an operation button for setting a travel route on which the combine 1 conducts automatic traveling. The start button image 902P is an operation button for starting the automatic traveling of the combine 1.

A worker presses the route setting button image 901P, and then, sets the travel route of the combine 1 while observing the travel control image MG. After the setting of the travel route of the combine 1, the worker presses the start button image 902P. The operation portion 74 outputs an operation signal to the second control portion 80. The second control portion 80 transmits an operation signal to the first control portion 50. As a result, the combine 1 reaps yet-to-be-reaped cereal culms on the travel route while traveling along the travel route. Therefore, the worker can use the mobile communication terminal 7 to make the combine 1 properly travel.

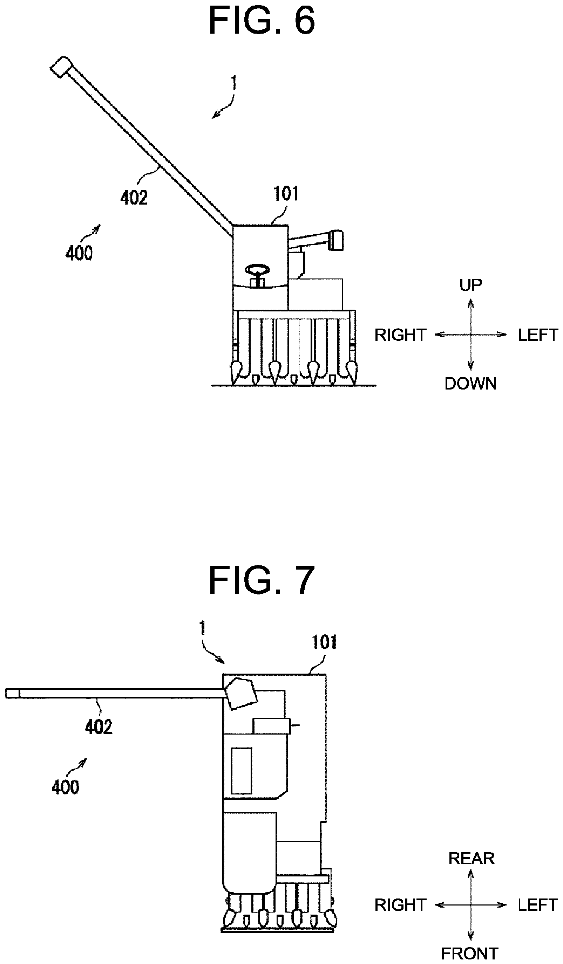

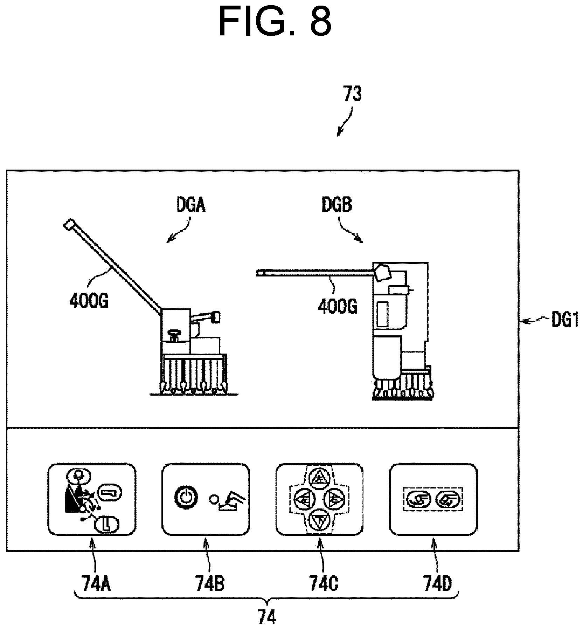

Next, an operation method of the combine 1 in the embodiment 1 is explained with reference to FIG. 6 to FIG. 8. FIG. 6 is a front view of the combine 1 at a first time point. FIG. 7 is a plan view of the combine 1 at the first time point. FIG. 8 is a view illustrating one example of a work control image DG1 displayed on the display portion 73 in the embodiment 1.

As shown in FIG. 6 and FIG. 7, the discharge auger 400 extends along a top right direction with respect to the traveling machine 101. Specifically, the arm 402 extends along a top right direction with respect to the traveling machine 101.

As shown in FIG. 8, the work control image DG1 is displayed on the display portion 73. In other words, the display portion 73 displays the travel control image MG and the work control image DG1 at different timings from each other. In particular, the display portion 73 manually switches an image displayed on the display portion 73 between the travel control image MG and the work control image DG1. The image displayed on the display portion 73 can be changed by a changing operation by a worker. The changing operation indicates an operation in which a worker orders the operation portion 74 of the mobile communication terminal 7 to change the image displayed on the display portion 73.

The work control image DG1 is an image for operating the discharge auger 400. The work control image DG1 includes an information that indicates a position of the discharge auger 400 with respect to the traveling machine 101. In particular, the work control image DG1 includes a side view image DGA and a plan view image DGB. The side view image DGA shows a state of the combine 1 seen from a lateral side of the combine 1 at the first time point. The plan view image DGB shows a state of the combine 1 seen from an upper side of the combine 1 at the first time point. The first time point is a current time point.

The communication processing portion 72 of the mobile communication terminal 7 receives state information transmitted from the combine 1. The auger position acquisition portion 95 acquirers the state information received by the communication processing portion 72. The display processing portion 86 specifies the position of the discharge auger 400 based on the state information acquired by the auger position acquisition portion 95 and displays a discharge auger image 400G at a corresponding position on each of the side view image DGA and the plan view image DGB.

While observing the side view image DGA and the plan view image DGB, a worker presses the auto return set button 74A, the discharge clutch button 74B, the auger operation button 74C, and the auger chute operation button 74D to move the arm 402 and operate the rotation of the below-described auger chute 401. The operation portion 74 outputs an operation signal to the second control portion 80. The second control portion 80 transmits an operation signal to the first control portion 50. As a result, the arm 402 moves with respect to the traveling machine 101. In particular, the arm 402 can be properly disposed so that the arm 402 extends along a top right direction with respect to the traveling machine 101.

Hereinbefore, the embodiment 1 of the present invention is explained. According to the embodiment 1, the mobile communication terminal 7 displays the travel control image MG and the work control image DG1. As a result, the mobile communication terminal 7 can operate both of the discharge auger 400 and the traveling device 102. Therefore, two operation portions, the operation portion for traveling and the operation portion for working are not needed. As a result, space in the driver's space 2a occupied by the operation portion can be reduced. Further, a worker can easily operate the discharge auger 400 and the traveling device 102 with a single operation portion.

Further, the mobile communication terminal 7 is removable from the traveling machine 101. As a result, a worker can remotely operate the combine 1. In this case, two operation portions, the operation portion for traveling and the operation portion for working are not needed. Therefore, a worker can easily operate the discharge auger 400 and the traveling device 102 with a single operation portion.

Further, the second control portion 80 controls the display portion 73 so that the display portion 73 switches an image displayed on the display portion 73 between the travel control image MG and the work control image DG1. As a result, when the display portion 73 displays the travel control image MG, a worker can focus on an operation of the traveling device 102, and when the display portion 73 displays the work control image DG1, a worker can focus on an operation of the discharge auger 400.

Further, the travel control image MG includes information that indicates a position of the combine 1 in the farm field. Further, the work control image DG1 includes information that indicates a position of the discharge auger 400 with respect to the traveling machine 101. As a result, a worker can grasp positions of the discharge auger 400 and the traveling device 102, and easily operate the discharge auger 400 and the traveling device 102.

The mobile communication terminal 7 is supported by the support column 2d. As a result, a worker can easily operate the discharge auger 400 and the traveling device 102 while being in the cabin 2.

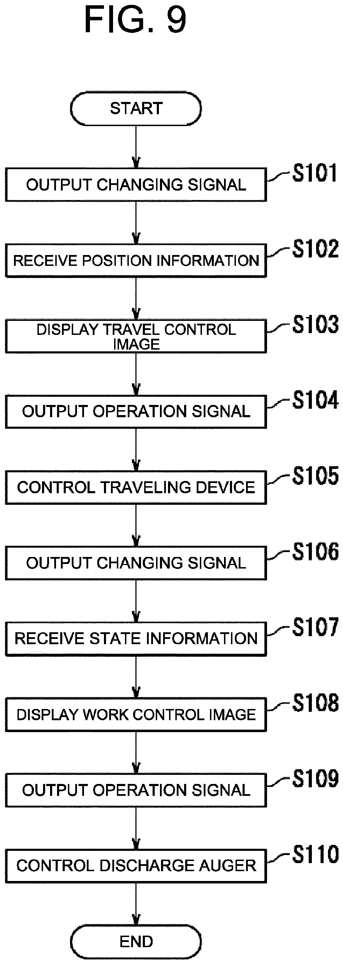

Next, an operation method of the combine 1 according to the embodiment 1 is explained with reference to FIG. 9. FIG. 9 is a flowchart illustrating an operation method of the combine 1 according to the embodiment 1.

Firstly, in a step S101, the operation portion 74 outputs a changing signal to the second control portion 80. The changing signal indicates displaying the travel control image MG.

Next, in a step S102, the communication processing portion 72 of the mobile communication terminal 7 receives position information transmitted from the combine 1.

Next, in a step S103, the display processing portion 86 displays the travel control image MG based on the position information acquired by the vehicle position acquisition portion 85. In particular, the travel control image MG includes a map image MP, an icon C1, a route setting button image 901P, and a start button image 902P.

Next, in a step S104, the operation portion 74 outputs an operation signal to the second control portion 80. The second control portion 80 transmits an operation signal to the first control portion 50.

Next, in a step S105, the first control portion 50 controls the traveling device 102 based on the operation signal.

Next, in a step S106, the operation portion 74 outputs a changing signal to the second control portion 80. The changing signal indicates displaying the work control image DG1.

Next, in a step S107, the communication processing portion 72 of the mobile communication terminal 7 receives state information transmitted from the combine 1.

Next, in a step S108, the display processing portion 86 displays the work control image DG1 based on the state information. In particular, the work control image DG1 includes a side view image DGA and a plan view image DGB.

Next, in a step S109, the operation portion 74 outputs an operation signal to the second control portion 80. The second control portion 80 transmits an operation signal to the first control portion 50.

Next, in a step S110, the first control portion 50 controls the discharge auger 400 based on the operation signal.

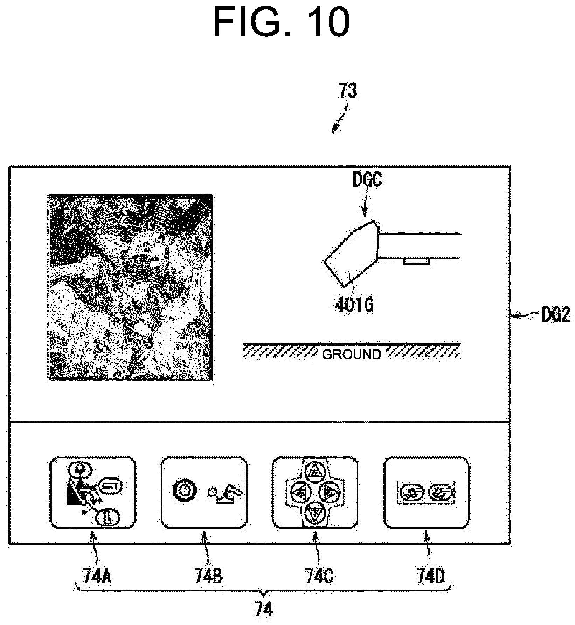

Next, an operation method of the combine 1 according to the embodiment 1 is explained with reference to FIG. 10. FIG. 10 is a view illustrating another example of a work control image displayed on the display portion 73 in the embodiment 1.

As shown in FIG. 10, a work control image DG2 is displayed on the display portion 73. In other words, the display portion 73 displays the travel control image MG, the work control image DG1, and the work control image DG2 at different timings from each other. In particular, the display portion 73 manually switches an image displayed on the display portion 73 between the travel control image MG, the work control image DG1, and the work control image DG2.

The work control image DG2 is an image for operating the discharge auger 400. The work control image DG2 includes information that indicates an angle of the auger chute 401 with respect to the arm 402. In particular, the work control image DG2 includes a side view image DGC. The side view image DGC shows a state of the discharge auger 400 seen from a lateral side of the discharge auger 400 at the first time point.

The communication processing portion 72 of the mobile communication terminal 7 receives state information transmitted from the combine 1. The auger position acquisition portion 95 acquirers the state information received by the communication processing portion 72. The display processing portion 86 specifies the angle of the auger chute 401 based on the state information acquired by the auger position acquisition portion 95 and displays the auger chute image 401G at a corresponding angle on the work control image DG2.

While observing the work control image DG2, a worker presses the auto return set button 74A, the discharge clutch button 74B, the auger operation button 74C, and the auger chute operation button 74D to rotate the auger chute 401. The operation portion 74 outputs an operation signal to the second control portion 80. The second control portion 80 transmits an operation signal to the first control portion 50. As a result, the auger chute 401 rotates with respect to the arm 402. Specifically, the auger chute 401 can be properly disposed so that the angle of the auger chute 401 becomes a predetermined angle with respect to the arm 402.

### <Embodiment 2>

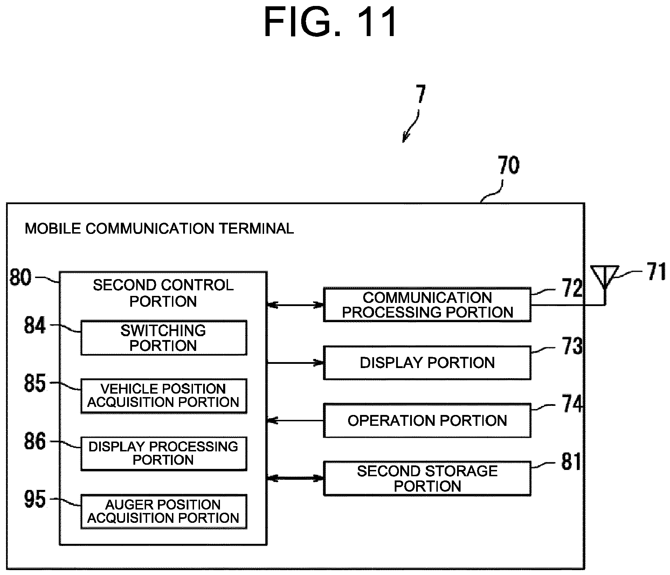

A combine 1 according to an embodiment 2 is explained with reference to FIG. 4 and FIG. 11. Note that components that are different from those of the embodiment 1 are explained and explanation of components that are same as those of the embodiment 1 is omitted. The embodiment 2 is different from the embodiment 1 in that the display portion 73 automatically switches an image displayed on the display portion 73 between the travel control image MG and the work control image DG1.

FIG. 11 is a block diagram of the mobile communication terminal in the embodiment 2. As shown in FIG. 11, the second control portion 80 can be activated as a vehicle position acquisition portion 85, the display processing portion 86, the auger position acquisition portion 95 and a switching portion 84. In particular, the second control portion 80 controls the display portion 73 and the operation portion 74.

The switching portion 84 controls the display portion 73 so that the display portion 73 automatically switches an image displayed on the display portion 73 between the travel control image MG and the work control image DG. In particular, when the combine 1 is positioned in a predetermined region AE, the second control portion 80 controls the display portion 73 so that the display portion 73 switches an image displayed on the display portion 73 from the travel control image MG to the work control image DG1. The predetermined region AE is, for example, a region within one meter of the truck TR. Coordinates of the predetermined region AE are stored in the second storage portion 81 by a worker.

Further, when the combine 1 is positioned outside the predetermined region AE, the second control portion 80 controls the display portion 73 so that the display portion 73 switches an image displayed on the display portion 73 from the work control image DG1 to the travel control image MG.

Hereinbefore, the embodiment 2 of the present invention is explained. According to the embodiment 2, the switching portion 84 controls the display portion 73 so that the display portion 73 automatically switches an image displayed on the display portion 73 between the travel control image MG and the work control image DG1. As a result, a worker can easily operate the discharge auger 400 and the traveling device 102.

### <Embodiment 3>

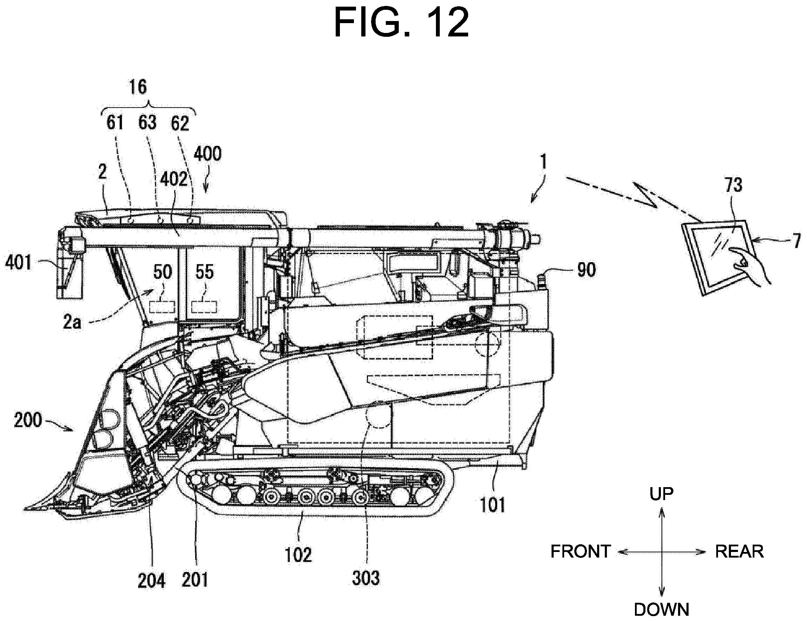

A combine 1 according to an embodiment 3 is explained with reference to FIG. 12. Note that components that are different from those of the embodiment 1 are explained and explanation of components that are same as those of the embodiment 1 is omitted. The embodiment 3 is different from the embodiment 1 in that the combine 1 includes an imaging portion 90.

As shown in FIG. 12, the combine 1 further includes the imaging portion 90. The imaging portion 90 takes an image of the periphery of the combine 1. For example, the imaging portion 90 takes an image of the rear side of the combine 1. Data of the imaging result acquired by the imaging portion 90 is output to the first control portion 50.

The communication processing portion 72 of the mobile communication terminal 7 receives the imaging result transmitted from the combine 1. The imaging result is displayed on the display portion 73. The display portion 73 displays the travel control image MG, the work control image DG1, and the imaging result at different timings from each other. In particular, the display portion 73 manually switches an image displayed on the display portion 73 between the travel control image MG, the work control image DG1, and the imaging result.

Hereinbefore, the embodiment 3 of the present invention is explained. According to the embodiment 3, a worker can observe the imaging result while being in the cabin 2. For example, a worker can check the rear side of the combine 1 while being in the cabin 2.

Hereinbefore, the embodiments of the present invention are explained with reference to the drawings (FIG. 1 to FIG. 12). However, the present invention is not limited to the embodiments described above and can be practiced in a variety of aspects without departing from the gist of the present invention. Further, a plurality of components disclosed in the above-described embodiments can be appropriately changed. For example, one component included in all components described in one embodiment may be added to components of another embodiment, or some components included in all components described in one embodiment may be omitted from this embodiment.

Further, in the drawings, each component is mainly and typically shown for ease of understanding the present invention, and thickness, length, and a number of each component, and a gap between components shown in the drawings may be different from actual thickness, length, a number, and a gap in view of making the drawings. Further, the configuration of each component in the above-described embodiments is merely an example and the present invention is not limited thereto. It is needless to say that the configuration can be changed in a variety of ways without substantially departing from the effect of the present invention.

### INDUSTRIAL APPLICABILITY

The present invention can be applied to a work vehicle.

### REFERENCE SIGNS LIST

- 1: combine (work vehicle)
- 50: first control portion
- 73: display portion (operation display portion)
- 74: operation portion (operation display portion)
- 80: second control portion
- 101: traveling car body (car body)
- 102: traveling device (traveling portion)
- 200: reaping device (working portion)
- 400: discharge auger (working portion)

## Claims

1. A work vehicle comprising:
a car body that can travel in a work field;
a traveling portion that makes the car body travel;
a working portion that conducts work on a target in the work field;
an operation display portion that outputs an operation signal; and
a control portion that controls the working portion and the traveling portion based on the operation signal;
wherein the control portion controls the operation display portion so that the operation display portion displays a travel control image and a work control image simultaneously with each other or at different timings from each other;
the travel control image includes an image for operating the traveling portion; and
the work control image includes an image for operating the working portion.

2. The work vehicle according to claim 1, wherein the control portion controls the operation display portion so that the operation display portion switches an image displayed on the operation display portion between the travel control image and the work control image.

3. The work vehicle according to claim 1, wherein:
the travel control image includes information that indicates a position of the work vehicle in the work field; and
the work control image includes information that indicates a position or an angle of the working portion with respect to the car body.

4. The work vehicle according to claim 1, wherein:
the car body comprises a cabin that includes a driver's seat; and
the operation display portion is supported by a support column of the cabin.

5. The work vehicle according to claim 1, wherein:
the operation display portion comprises a housing;
the control portion comprises:
a first control portion that is disposed in the car body; and
a second control portion that is disposed in the housing;
the first control portion and the second control portion can communicate with each other; and
the housing is removable from the car body.

6. The work vehicle according to claim 1, further comprising:
an imaging portion that takes an image of a periphery of the work vehicle;
wherein the control portion controls the operation display portion so that the operation display portion displays an imaging result of the imaging portion.

7. A work vehicle comprising:
a car body that can travel in a work field;
a traveling portion that makes the car body travel;
a discharge auger that conducts work on a target in the work field;
an operation display portion that outputs an operation signal; and
a control portion that controls the discharge auger and the traveling portion based on the operation signal;
wherein the control portion controls the operation display portion so that the operation display portion displays a work control image when the car body is positioned in a predetermined region of the target and the operation display portion displays a travel control image when the car body is positioned outside the predetermined region of the target;
the travel control image includes an image for operating the traveling portion; and
the work control image includes an image for operating the discharge auger.
